# EUROPEAN PATENT APPLICATION

(11) **EP 2 868 433 A2**
(43) Date of publication of application: **06.05.2015**
(21) Application number: 14150562.8
(22) Date of filing: 09.01.2014
(51) Int. Cl.: B23Q 7/04, B25J 9/02

(54) **Bilateral door-type automatic material-taking device**

(30) Priority: 30.10.2013 TW 102139398
(71) Applicant: Barload Machine Co.,Ltd., Changhua County 50080 (TW)
(72) Inventor: Lu, Fang-Yen, Changhua County 50080 (TW)
(74) Representative: Becker Kurig Straus

(57) **Abstract**

A bilateral door-type automatic material-taking device (10) includes a feed table (20) located between two machine tools (1) and a material-taking mechanism (30) having a lifting unit (31), a linear displacement unit (33) and a robotic arm (35). The lifting unit (31) has a fixed member (311), a sliding member (313) and a positioning member (315). The fixed member (311) is fixed to the feed table (20). The sliding member (313) is configured to move vertically with respect to the fixed member (311). The positioning member (315) is deposited between the fixed member (311) and the sliding member (313) position the sliding member (313) with respect to the fixed member (311). The linear displacement unit (33) is attached to the sliding member (313), for moving the robotic arm (35) along X, Y and Z axes to take and place workpieces (6) between the feed table (20) and the machine tools (1). Thereby, the automatic material-taking device (10) helps to reduce costs for equipment deployment, and is suitable for standardized and mass production, thereby providing economic benefits.

## Description

### BACKGROUND OF THE INVENTION

### 1. Technical Field

The present invention relates to material-taking devices for machine tools, and more particularly to a bilateral door-type automatic material-taking device, which helps to reduce costs for equipment deployment and is suitable for standardized and mass production, thereby providing economic benefits.

### 2. Description of Related Art

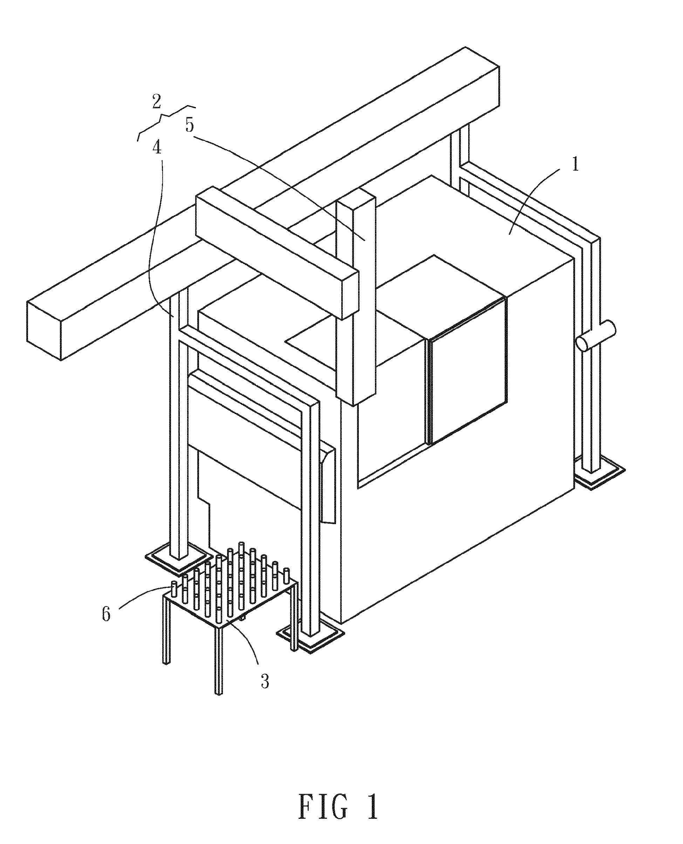

The conventional automated CNC machine tool 1 uses a gantry-type material-taking device 2 to automatically take and place material from and to the machine tool 1 and a feed table 3. As shown in FIG. 1, the gantry-type material-taking device 2 has a rack 4 and a robotic arm 5. The rack 4 spans over the machine tool 1. The robotic arm 5 is installed above the machine tool 1 and configured to move horizontally along the rack 4. The feed table 3 is set beside the machine tool 1. In practical use, the robotic arm 5 first moves to the top of the feed table 3 and then goes down to take a workpiece 6. Following that, after going up and moving to the top of the machine tool 1, the robotic arm 5 has its end carrying the workpiece 6 extending toward a chuck (not shown) of the machine tool 1, so that the chuck can take over the workpiece 6 for machining. Upon the completion of machining, the robotic arm 5 stretches to the chuck of the machine tool 1 again to take and put the machined workpiece 6 back to the feed table 3, thereby accomplishing automatic material-taking and material-placing procedures.

However, the above-mentioned conventional gantry-type material-taking device 2 has to be customized for individual models of CNC machine tools, so one gantry-type material-taking device 2 can only support the automatic material-taking and material-placing procedures for a specific model of CNC machine tools. In the event that the user acquires an additional CNC machine tool of different specifications, another gantry-type material-taking device designed for the additional CNC machine tool has to be prepared for the foregoing automatic procedures. With increase of equipment deployments, the overall costs for equipment deployment would be significantly increased. In addition, depending on the manufacturers, the existing CNC machine tools have different specifications and the gantry-type material-taking device 2 conventionally has to be customized for individual models of CNC machine tools as a machine-specific accessory. This hinders the existing material-taking device 2 from being standardized in terms of specifications, and in turn prevents the costs for development and installation from being reduced, being against industrial economic interests.

To conclude, the existing material-taking devices have shortcomings and need to be improved.

### SUMMARY OF THE INVENTION

The primary objective of the present invention is to provide a bilateral door-type automatic material-taking device, helps to reduce costs for equipment deployment and is adaptive to machine tools of various specifications, making it suitable for standardized and mass production, thereby providing economic benefits.

For achieving the foregoing objective, the disclosed bilateral door-type automatic material-taking device comprises a feed table and a material-taking mechanism. The feed table is located between two machine tools and serves to hold a workpiece. The material-taking mechanism includes a lifting unit, a linear displacement unit, and a robotic arm. The lifting unit has a fixed member, a sliding member, and a positioning member. The fixed member is fixed to the feed table. The sliding member is configured to move vertically with respect to the fixed member. The positioning member is provided between the fixed member and the sliding member, for positioning the sliding member with respect to the fixed member. The linear displacement unit is attached to the sliding member of the lifting unit, and serves to move the robotic arm along a first axis, a second axis, and a third axis, so that the robotic arm is enabled to move between the feed table and the machine tools for taking and placing the workpiece.

Therein, the feed table comprises a base and a platform deposited on the base. The base has an electric control unit, which is electrically connected to the material-taking mechanism and to the machine tools, respectively. The platform is provided with a positioning section and a tray. The tray is positioned on the positioning section, and serves to hold the workpiece.

Therein, the feed table further comprises a frame, which is mounted on the base and surrounds a periphery of the platform.

Therein, the frame has a shutter deposited in front of the second axis and pivotable against the third axis.

Therein, the fixed member and the sliding member are two slide guides and two columns, respectively, wherein each said rod is slidably received in one said slide guide.

Therein, the slide guides and the columns are correspondingly provided with a plurality of bores, so that the positioning member is selectively inserted into the bores.

Therein, the fixed member and the sliding member of the lifting unit are correspondingly bored with a plurality of bores, so that the positioning member is selectively inserted into the bores.

Therein, the linear displacement unit includes a first slide rail seat, a second slide rail seat and a third slide rail seat. The first slide rail seat is such mounted on the sliding member that it is parallel to the ground and located above the feed table while extending toward the machine tools. The second slide rail seat is such mounted on the first slide rail seat that it can move along the first axis. The third slide rail seat is such mounted on the second slide rail seat that it can move along the second axis. The robotic arm is such mounted on the third slide rail seat that it can move along the third axis.

Therein, the machine tool and the feed table are atop provided with a feed inlet and an opening, respectively, for the robotic arm to place and take the workpiece into and from the feed inlet and the opening.

Therein, the robotic arm has a material-taking section, which is rotatably affixed to a front end of the robotic arm and faces the feed table, for rotating to take and place the workpiece.

Since the feed table of the disclosed bilateral door-type automatic material-taking device is located between the two machine tools, and its linear displacement unit spans over the machine tools, the robotic arm can take and place the workpiece from and to the feed table and the machine tools, thereby reducing costs for equipment deployment. Furthermore, with the lifting unit, the robotic arm is adaptive to machine tools of various specifications. In this way, the disclosed automatic material-taking device is suitable for standardized and mass production, and helps to reduce costs for development and installation, thereby providing economic benefits.

For further illustrating the means and functions by which the present invention achieves the certain objectives, the following description, in conjunction with the accompanying drawings and preferred embodiments, is set forth as below to illustrate the implement, structure, features and effects of the subject matter of the present invention.

### BRIEF DESCRIPTION OF THE DRAWINGS

The invention as well as a preferred mode of use, further objectives and advantages thereof will be best understood by reference to the following detailed description of illustrative embodiments when read in conjunction with the accompanying drawings, wherein:
FIG. 1 is a perspective view of a conventional gantry-type automatic material-taking device;
FIG. 2 is a perspective view of a bilateral door-type automatic material-taking device according to one embodiment of the present invention;
FIG. 3 is another perspective view of the bilateral door-type automatic material-taking device of FIG. 2, wherein it is applied to two machine tools;
FIG. 4 is a front view of the bilateral door-type automatic material-taking device of FIG. 2;
FIG. 5 is another front view of the bilateral door-type automatic material-taking device of FIG. 2, showing its robotic arm extending downward to take a workpiece;
FIG. 6 is another front view of the bilateral door-type automatic material-taking device of FIG. 2, showing the robotic arm bringing the workpiece to the chuck of one of the machine tool;
FIG. 7 is another front view of the bilateral door-type automatic material-taking device of FIG. 2, showing the robotic arm bringing the workpiece to the chuck of the other machine tool; and
FIG. 8 is a left lateral view of FIG. 2, showing its sliding member in the lifting unit lifted.

### DETAILED DESCRIPTION OF THE INVENTION

The following preferred embodiments when read with the accompanying drawings are made to clearly exhibit the above-mentioned and other technical contents, features and effects of the present invention.

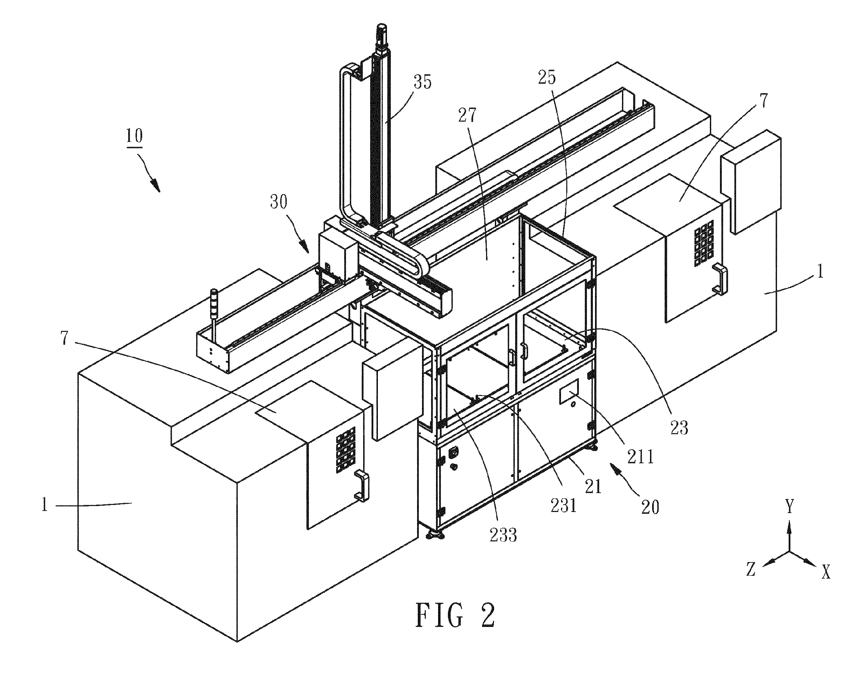

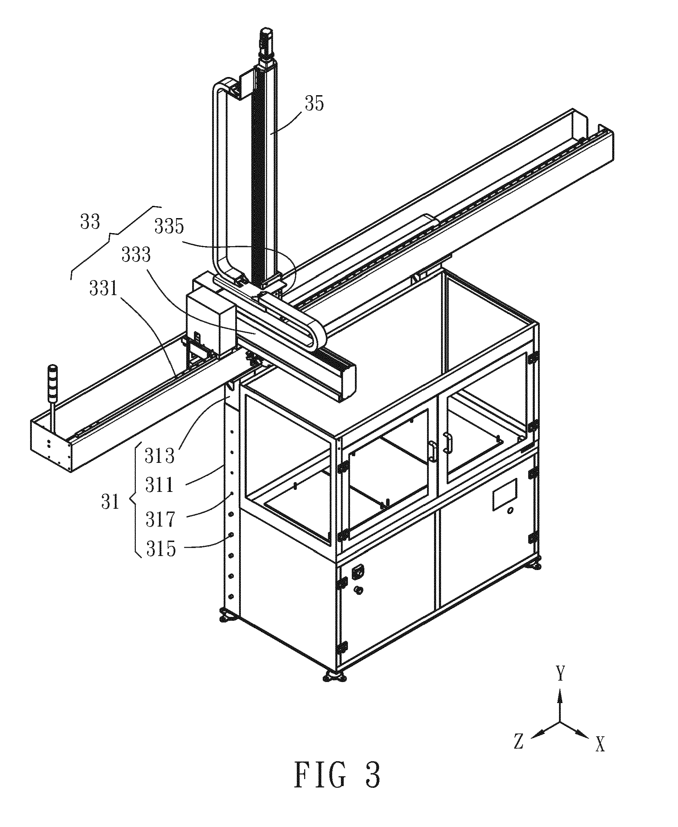

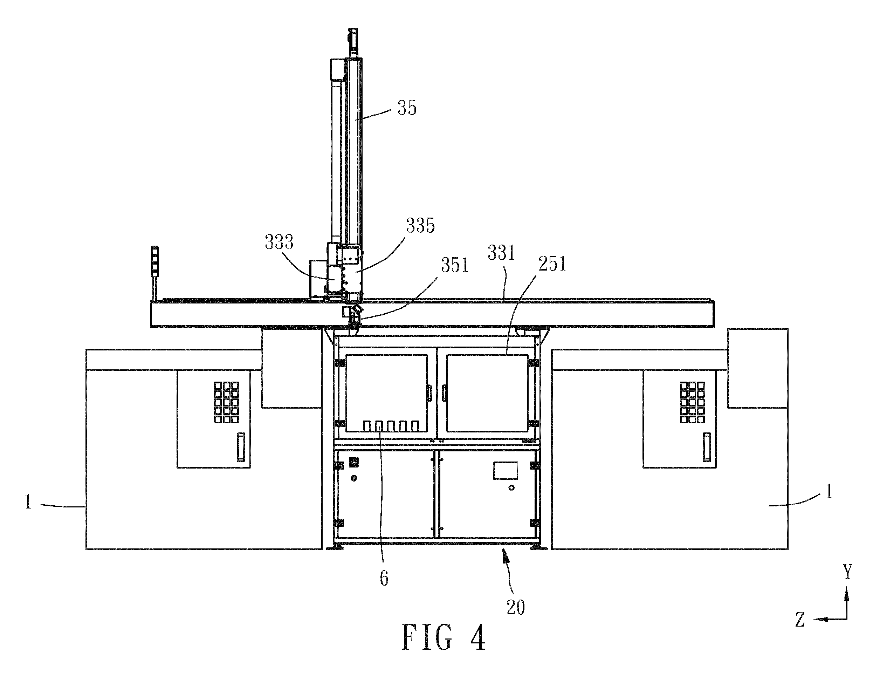

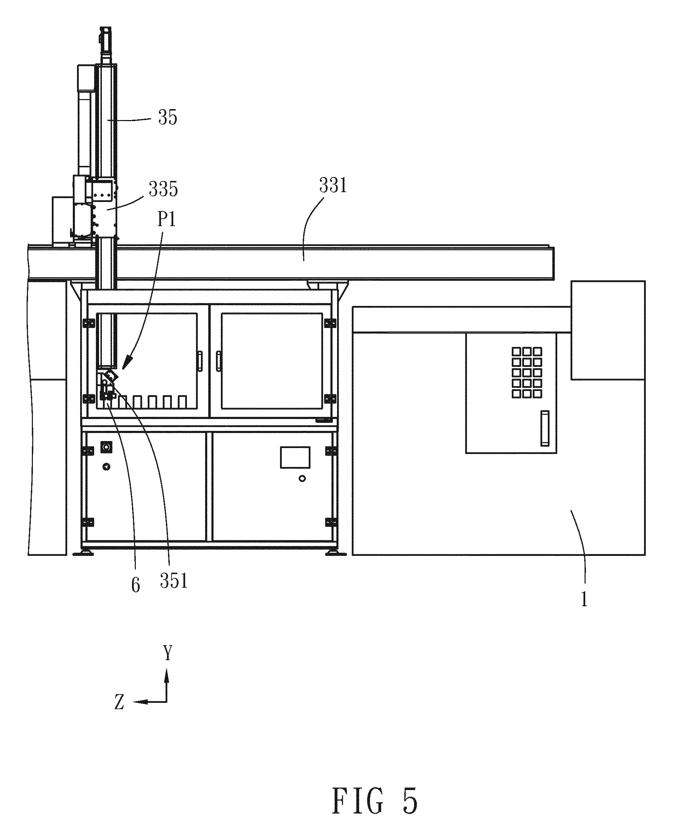

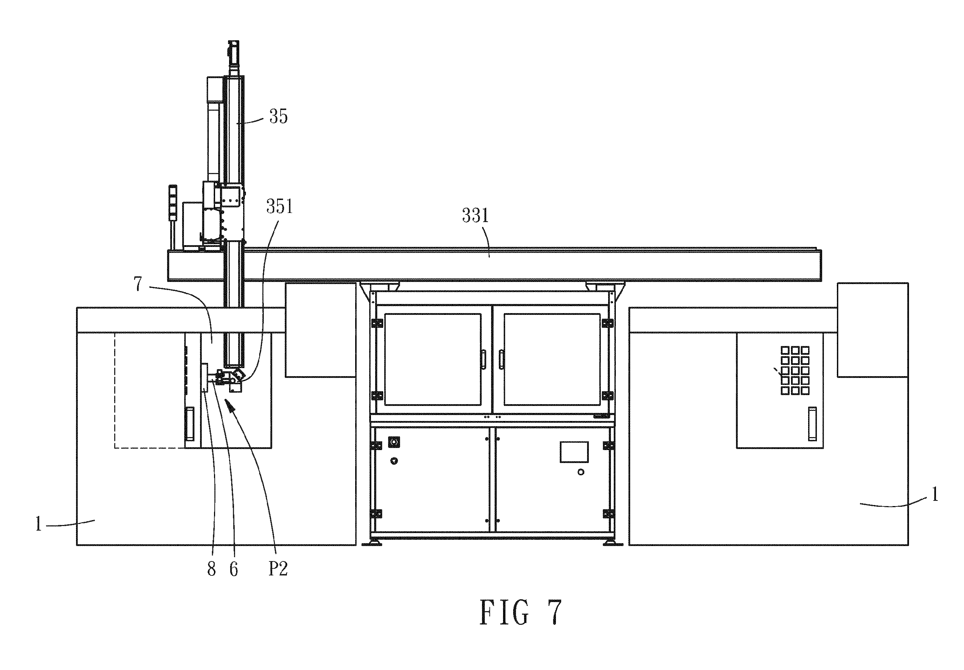

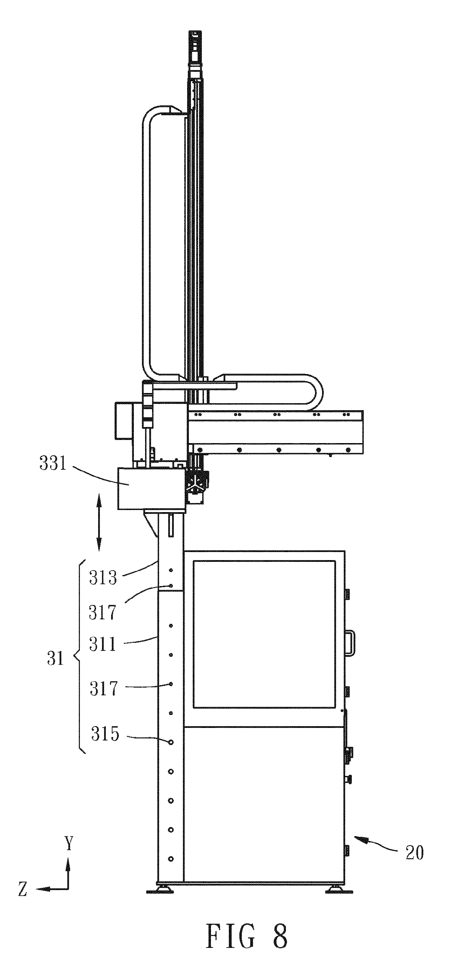

FIG. 2 through FIG. 8 depicts a bilateral door-type automatic material-taking device 10 according to one preferred embodiment of the present invention, which comprises the components described below.

The bilateral door-type automatic material-taking device 10 has a feed table 20 to be set between two machine tools 1 and serves to hold one or more workpieces 6. While in the preferred embodiment the feed table 20 has a cabinet-like structure for containing the workpieces 6 therein, it may be in other embodiments a conveying device or a conveyor belt, without limitation. The machine tool 1 is a computer numerical control (CNC) machine tool, and is atop provided with a feed inlet 7 that opens or close in response to the opening or closing of shutters (as described below) of the machine tool 1.

The bilateral door-type automatic material-taking device 10 also has a material-taking mechanism 30, which comprises a lifting unit 31, a linear displacement unit 33 and a robotic arm 35. The lifting unit 31 has a fixed member 311, a sliding member 313 and a positioning member 315. The fixed member 311 and the sliding member 313 are correspondingly provided with a plurality of bores 317. The fixed member 311 is fixed to the feed table 20. The sliding member 313 is configured to move vertically with respect to the fixed member 311. The positioning member 315 is selectively inserted into the bores 317 of the fixed member 311 and the sliding member 313, for positioning the sliding member 313 with respect to the fixed member 311. The linear displacement unit 33 is attached to the sliding member 313 of the lifting unit 31, and serves to move the robotic arm 35 along a first axis Z, a second axis Z, and a third axis Y, so that the robotic arm 35 can move between the feed table 20 and the machine tools 1 to take and place the workpiece 6. With the feed table 20 located between the machine tools 1, and the linear displacement unit 33 spanning over the machine tools 1, the robotic arm 35 is enabled to take and place the workpiece 6 from and to the feed table 20 and the machine tools 1, thereby reducing costs for equipment deployment. Additionally, with the lifting unit 31, the robotic arm 35 is adaptive to machine tools of various specifications, making the disclosed automatic material-taking device 10 suitable for standardized and mass production, and helpful to reduce costs for development and installation, thereby providing economic benefits.

The feed table 20 comprises a base 21, a platform 23 on the base 21, a frame 25, and an opening 27 at the top of the feed table 20. The base 21 includes an electric control unit 211, which is electrically connected to the material-taking mechanism 30 and the machine tools 1, respectively. The platform 23 has a positioning section 231 and a tray 233. The tray 233 is positioned on the positioning section 231, and serves to hold the workpieces 6. The frame 25 is mounted on the base 21 and surrounds a periphery of the platform 23, so as to define the opening 27. The frame 25 has two said shutters 251 in front of the second axis X. Each of the shutters 251 is pivotable against the third axis Y. Thereby, the frame 25 and the shutters 251 can not only ensure the operator with operational safety, but also facilitate positioning of the tray 233 on the positioning section 231 of the platform 23, thereby reducing the time required by tray change and in turn improving the efficiency of automated processing.

In the material-taking mechanism 30, the fixed member 311 and the sliding member 313 of the lifting unit 31 are two slide guides and two columns, respectively. Each said sliding member 313 is slidably received in one said fixed member 311. Additionally, the fixed member 311 and the sliding member 313 are correspondingly provided with a plurality of bores 317, so that the positioning member 315 is selectively inserted into the bore 317. In practical use, the lifting unit 31 may have plural said positioning members 315, each being a threaded bolt, while the bores 317 of the fixed member 311 are all threaded holes, and the bores 317 of the sliding member 313 are through holes. In this case, the positioning members 315 are screwed into the bores 317 of the fixed member 311 and enter the bores 317 of the sliding member 313, thereby firmly positioning the sliding member 313 at a predetermined position on the fixed member 311. The linear displacement unit 33 includes a first slide rail seat 331, a second slide rail seat 333 and a third slide rail seat 335. The first slide rail seat 331 is such mounted on the sliding member 313 that it keeps parallel to the ground, and is above the feed table 20, while extending to the two machine tools 1. The second slide rail seat 333 is such mounted on the first slide rail seat 331 that it can move along the first axis Z. The third slide rail seat 335 is such mounted on the second slide rail seat 333 that it can move along the second axis X. The robotic arm 35 is such mounted on the third slide rail seat 335 that it can move along the third axis Y. The robotic arm 35 has a material-taking section 351, which is rotatably attached to a front end of the robotic arm 35 and faces the feed table 20, so as to rotate between a material-taking position P1 and a material-placing position P2 for taking and placing the workpiece 6.

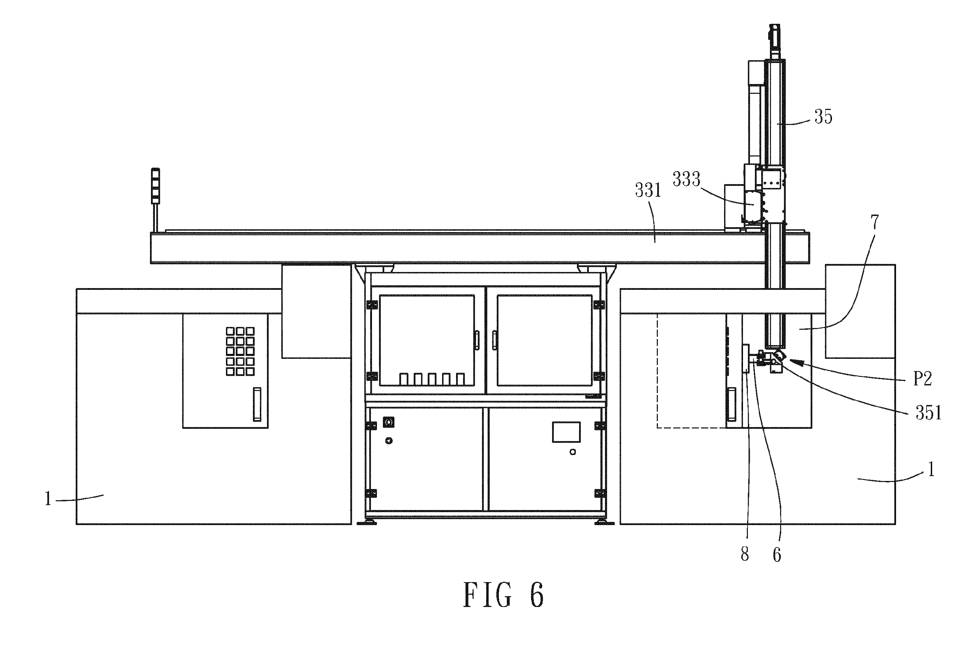

Please refer to FIG. 6 through FIG. 8 for the practical installation and operation of the disclosed bilateral door-type automatic material-taking device 10. For installation, in the lifting unit 31, the sliding member 313 is first properly positioned with respect to the fixed member 311 according to the specifications of the specific machine tools 1, and then the positioning members 315 are screwed into the bores 317 of the fixed member 311 and the sliding member 313. Thereby, the installation is promptly and economically completed. In terms of operation, the robotic arm 35 stretches to reach the feed table 20 through the opening 27, and then the material-taking section 351 rotates to the material-taking position P1 (namely becoming parallel to the third axis Y) to take the workpiece 6 placed on the tray 233. Afterward, the robotic arm 35 moves along the third slide rail seat 335 to go up in the third axis Y, and then moves along the first and second slide rail seats 331, 333 to displace in the first axis Z and the second axis X, until the robotic arm 35 comes to a position in front of a chuck 8 of the machine tool 1 and above the central axis of the chuck 8. After that, the robotic arm 35 moves along the third slide rail seat 335 in the third axis Y to stretches into the feed inlet 7 of the machine tool 1 and gets aligned with the central axis of the chuck 8. The material-taking section 351 at this time has rotated to the material-placing position P2 (namely becoming vertical to the third axis Y). At last, the robotic arm 35 inches along the first slide rail seat 331 to the first axis Z, allowing the chuck 8 of the machine tool 1 to take over the workpiece 6 for machining. While the workpiece 6 is machined, the robotic arm 35 returns to the feed table 20 to take another workpiece 6, and repeats the foregoing displacement to bring the unmachined workpiece 6 to the chuck of the other machine tool 1. Upon the completion of machining, the robotic arm 35 stretches to the chucks 8 of the machine tools 1 again successively to take and put the machined workpiece 6 back to the tray 233, thereby accomplishing automatic material-taking and material-placing procedures. After all the workpieces 6 on the tray 233 are machined, the operator can promptly change the tray 233 and positioning a new tray of workpieces by means of the positioning section 231.

To sum up, with the feed table 20 located between the machine tools 1, and the linear displacement unit 33 spanning over the machine tools 1, the robotic arm 35 is enabled to take and place the workpiece 6 from and to the feed table 20 and the machine tools 1, thereby reducing costs for equipment deployment. Additionally, with the lifting unit 31, the robotic arm 35 is adaptive to machine tools of various specifications, making the disclosed automatic material-taking device 10 suitable for standardized and mass production, and helpful to reduce costs for development and installation, thereby providing economic benefits. In addition, the positioning section 231 of the platform 23 facilitates prompt positioning of the tray 233, thereby reducing the time required by tray change and in turn improving the efficiency of automated processing.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. A bilateral door-type automatic material-taking device (10), comprising:
a feed table (20), being located between two machine tools (1) and serving to hold a workpiece (6); and
a material-taking mechanism (30), including a lifting unit (31), a linear displacement unit (33), and a robotic arm (35); the lifting unit (31) having a fixed member (311), a sliding member (313), and a positioning member (315); the fixed member (311) being fixed to the feed table (20), the sliding member (313) being configured to move vertically with respect to the fixed member (311), and the positioning member (315) being provided between the fixed member (311) and the sliding member (313) for positioning the sliding member (313) with respect to the fixed member (311); and the linear displacement unit (33) being attached to the sliding member (313) of the lifting unit (31), and serving to move the robotic arm (35) along a first axis (Z), a second axis (X), and a third axis (Y), so that the robotic arm (35) is enabled to move between the feed table (20) and the machine tools (1) to take and place the workpiece (6).

2. The bilateral door-type automatic material-taking device (10) of Claim 1, wherein the feed table (20) comprises a base (21) and a platform (23) deposited on the base (21); the base (21) having an electric control unit (211) that is electrically connected to the material-taking mechanism (30) and the machine tool (1), respectively; and the platform (23) having a positioning section (231) and a tray (233), in which the tray (233) is positioned on the positioning section (231) and serves to hold the workpiece (6).

3. The bilateral door-type automatic material-taking device (10) of Claim 1, wherein the feed table (20) further comprises a frame (25), which is mounted on the base (21) and surrounds a periphery of the platform (23).

4. The bilateral door-type automatic material-taking device (10) of Claim 3, wherein the frame (25) is provided with a shutter (251) that is located in front of the second axi s(X) and pivotable against the third axis (Y).

5. The bilateral door-type automatic material-taking device (10) of Claim 1, wherein the fixed member (311) and the sliding member (313) are two slide guides and two columns, respectively, and each of the columns (313) is slidably received in one said slide guide (311).

6. The bilateral door-type automatic material-taking device (10) of Claim 5, wherein the slide guides (311) and the columns (315) are correspondingly provided with bores (317), so that the positioning member (315) is allowed to be selectively inserted into the bores (317).

7. The bilateral door-type automatic material-taking device (10) of Claim 1, wherein the fixed member (311) and the sliding member (313) of the lifting uni (31) are correspondingly provided with bores (317), so that the positioning member (315) is allowed to be selectively inserted into the bores (317).

8. The bilateral door-type automatic material-taking device (10) of Claim 1, wherein the linear displacement unit (33) includes a first slide rail seat (331), a second slide rail seat (333), and a third slide rail seat (335); the first slide rail seat (331) being mounted on the sliding member (313), keeping parallel to the ground, being located above the feed table (20), and extending to the machine tools (1); the second slide rail seat (333) being mounted on the first slide rail seat (331) and configured to move along the first axis (Z); the third slide rail seat (335) being mounted on the second slide rail seat (333) and configured to move along the second axis (X); and the robotic arm (35) being mounted on the third slide rail seat (335) and configured to move along the third axis (Y).

9. The bilateral door-type automatic material-taking device (10) of Claim 8, wherein the machine tool (1) and the feed table (20) are atop provided with a feed inlet (7) and an opening (27), respectively, for the robotic arm (35) to take or place the workpiece (6) therethrough.

10. The bilateral door-type automatic material-taking device (10) of Claim 1, wherein the robotic arm (35) has a material-taking section (351), which is rotatably attached to a front end of the robotic arm (35) and faces the feed table (20), for rotating in order to take or place the workpiece (6).
